# EUROPÄISCHE PATENTSCHRIFT

(11) **EP 3 898 322 B1**
(45) Veröffentlichungstag und Bekanntmachung des Hinweises auf die Patenterteilung: **27.09.2023**
(21) Anmeldenummer: 19816579.7
(22) Anmeldetag: 02.12.2019
(51) Int. Cl.: B60N 2/08, B60N 2/42

(54) **FAHRZEUGSITZEINRICHTUNG FÜR EIN KRAFTFAHRZEUG**
VEHICLE SEATING DEVICE FOR AN AUTOMOTIVE VEHICLE
DISPOSITIF DE SIÈGE DE VÉHICULE POUR VÉHICULE AUTOMOBILE

(30) Priorität: 18.12.2018 DE 102018222061
(43) Veröffentlichungstag der Anmeldung: 27.10.2021
(73) Patentinhaber: VOLKSWAGEN AKTIENGESELLSCHAFT, 38440 Wolfsburg (DE)
(72) Erfinder: BRILL, Daniel, 38446 Wolfsburg (DE)
(86) Internationale Anmeldenummer: PCT/EP2019/083243
(87) Internationale Veröffentlichungsnummer: WO 2020/126425

(56) Entgegenhaltungen:
- DE-A1- 3 239 682
- DE-A1-102013 011 007
- DE-U1-202007 006 446

## Beschreibung

Die Erfindung betrifft eine Fahrzeugsitzeinrichtung für ein Kraftfahrzeug, mit einem Fahrzeugsitz, der ein Sitzgestell mit einer Führungsschiene zur längsverschieblichen Lagerung des Fahrzeugsitzes relativ zu einer Fahrzeugkarosserie aufweist, mit einer Verriegelungseinrichtung zum Arretieren des Fahrzeugsitzes in mehreren Schiebepositionen entlang der Führungsschiene, mit einem verlagerbaren und mit der Verriegelungseinrichtung gekoppelten Betätigungshebel zum Lösen der Arretierung, und mit einer Trägheitsverriegelung, die dazu ausgebildet ist, ein Verschieben des Fahrzeugsitzes bei Auftreten einer kritischen Verzögerung in Schieberichtung zu verhindern.

Fahrzeugsitzeinrichtungen der eingangs genannten Art sind aus dem Stand der Technik bereits bekannt. So offenbart beispielsweise die Offenlegungsschrift DE 698 05 057 T2 eine Fahrzeugsitzeinrichtung mit einem längsverschieblich verstellbaren Fahrzeugsitz. Mittels einer Verriegelungseinrichtung ist der Fahrzeugsitz dabei in mehreren Schiebestellungen arretierbar. Die Verriegelungseinrichtung weist einen Bowdenzug auf. Diesem ist eine Trägheitsverriegelung zugeordnet. Treten hohe Trägheitskräfte beziehungsweise Beschleunigungen auf, so wird die Trägheitsverriegelung betätigt, welche auf den Bowdenzug derart wirkt, dass eine Betätigung des Bowdenzugs durch einen Benutzer nicht zum Entriegeln der Verriegelungseinrichtung führt, vielmehr wird eine bereits betätigte Verriegelungseinrichtung zurückgestellt, sodass die Verriegelung trotz betätigtem Betätigungshebel eingreift und ein weiteres Verschieben des Fahrzeugsitzes verhindert. Dadurch wird erreicht, dass beispielsweise bei einem Auffahrunfall der Fahrzeugsitz nicht durch die auftretenden plötzlichen Beschleunigungen oder Verzögerungen ungewollt längsverstellt wird.

Eine weitere Fahrzeugsitzeinrichtung mit einer Trägheitsverriegelung ist aus der Offenlegungsschrift DE 35 18 949 A1 bekannt. Die dort vorgesehene Trägheitsverriegelung in der Form einer Exzenterscheibe stellt bei Auftreten einer entsprechenden Verzögerung selbsttätig eine zusätzliche Verriegelung zwischen Fahrzeugsitz und Sitzgestell oder Karosserie her, um den Fahrzeugsitz an einem Verschieben zu hindern.

Die Offenlegungsschriften DE 10 2013 011 007 A1 und DE 32 39 682 A1 offenbaren jeweils eine gattungsgemäße Fahrzeugsitzeinrichtung. Aus der Gebrauchsmusterschrift DE 20 2007 006 446 U1 ist eine weitere Fahrzeugsitzeinrichtung mit einer Trägheitsverriegelung bekannt.

Der Erfindung liegt die Aufgabe zugrunde, eine Fahrzeugsitzeinrichtung zu schaffen, welche einfach und kostengünstig ein ungewolltes Betätigen der Verriegelungseinrichtung verhindert.

Die der Erfindung zugrundeliegende Aufgabe wird durch eine Fahrzeugsitzeinrichtung mit den Merkmalen des Anspruchs 1 gelöst. Diese hat den Vorteil, dass durch Verwendung einfacher technischer Mittel der Betätigungshebel bei kritischer Verzögerung, die in Schieberichtung des Fahrzeugsitzes auftreten, an einer Bewegung in die Lösestellung der Verriegelungseinrichtung mechanisch behindert wird. Dadurch ist ein ungewolltes Lösen der Verriegelungseinrichtung sicher verhindert. Dies ist beispielsweise insbesondere dann von Vorteil, wenn auf dem Fahrzeugboden Gegenstände unbefestigt liegen, die bei einer plötzlichen Verzögerung gegen den Betätigungshebel geschleudert werden könnten. Durch die vorteilhafte Trägheitsverriegelung wird ein Betätigen des Betätigungshebels jedoch verhindert. Gleiches gilt insbesondere auch für Kraftfahrzeuge, in welchen sich Fahrgäste einander gegenübersitzen, sodass die Füße eines Fahrgasts in Richtung des Betätigungshebels vom Fahrzeugsitz eines ihnen gegenübersitzenden Fahrgasts gerichtet sind, sodass bei einer plötzlich auftretenden Verzögerung der eine Fahrgast ungewollt mit seinem Fuß den Betätigungshebel der Verriegelungseinrichtung des gegenüberliegenden Fahrzeugsitzes betätigen könnte. Erfindungsgemäß wird dies dadurch verhindert, dass die Trägheitsverriegelung ein um eine Horizontalachse verschwenkbar gelagertes Sperrelement aufweist, das in einer Neutralstellung beabstandet zu dem Betätigungshebel fest liegt, und bei Auftreten einer kritischen Verzögerung durch seine Trägheit derart verschwenkt ist, dass es den Betätigungshebel blockierend an dem Betätigungshebel anliegt. In seiner Neutralstellung liegt also das Sperrelement beabstandet zu dem Betätigungshebel. Damit ist der Betätigungshebel frei bewegbar und kann beispielsweise in die die Verriegelung beziehungsweise Arretierung lösende Position bewegt werden. Tritt eine kritische Verzögerung auf, in Schieberichtung des Fahrzeugsitzes, so reagiert darauf das Sperrelement, indem es entsprechend der Verzögerungsrichtung verschwenkt, bis es in eine Stellung gelangt, in welcher es sich an dem Betätigungshebel abstützt, sodass der Betätigungshebel an dem Sperrelement abgestützt und dadurch blockiert. Dadurch ist eine Weiterbewegung des Betätigungshebels mechanisch einfach und sicher verhindert. Die Trägheitsverriegelung ist dabei insbesondere derart ausgebildet, dass in der Blockierstellung das Sperrelement eine Betätigungskraft des Betätigungshebels senkrecht in die Horizontalachse einleitet, sodass ein Verschwenken des Sperrelements in der Blockierstellung durch den Betätigungshebel sicher verhindert ist.

Erfindungsgemäß ist das Sperrelement in der Neutralstellung beabstandet zu dem Betätigungshebel und zu einem an dem Fahrzeugsitz fest angeordneten Stützelement angeordnet, wobei das Stützelement den Verschwenkweg des Sperrelements über die Blockierstellung hinaus derart begrenzt, dass das Sperrelement in der Blockierstellung an dem Stützelement anliegt. Dadurch gewährleistet das Stützelement, dass das Sperrelement nicht über die Blockierstellung hinaus durch die Trägheit verschwenkt werden kann, sodass stets gewährleistet ist, dass bei Auftreten einer kritischen Verzögerung das Sperrelement in die Blockierstellung zum Blockieren des Betätigungshebels verschwenkt wird und dort dann sicher mit dem Betätigungshebel zusammenwirkt.

Erfindungsgemäß ist vorgesehen, dass das Sperrelement zwei Schenkel aufweist, die einendig miteinander verbunden und V-förmig oder L-förmig zueinander ausgerichtet sind. Durch das Vorsehen von zwei Schenkeln ist gewährleistet, dass die Trägheitsverriegelung insbesondere unabhängig von der Richtung der Längsbeschleunigung oder Verzögerung wirkt, sodass sowohl bei einer Verzögerung in Vorwärtsfahrtrichtung als auch in Rückwärtsfahrtrichtung jeweils das Sperrelement greift, um den Betätigungshebel an einer Bewegung zu blockieren. Durch die V- oder L-förmige Ausbildung ergibt sich ein vorteilhaftes Gleichgewicht des Sperrelements, insbesondere, wenn dieses in den Verbindungsbereich der Schenkel verschwenkbar gelagert ist.

Bevorzugt sind die Schenkel dazu außerdem gleich lang ausgebildet, sodass ein vorteilhafter Gleichgewichtszustand gewährleistet ist.

Gemäß einer bevorzugten Weiterbildung der Erfindung weist das Sperrelement im Verbindungsbereich der Schenkel ein Drehgelenk zur schenkbaren Lagerung an dem Fahrzeugsitz auf. In seiner Neutralstellung hängt somit das Sperrelement mit den beiden Schenkeln nach unten an dem Fahrzeugsitz. Insbesondere wenn die Schenkel gleich lang sind, liegen die Schenkel dabei in einem gleichen Winkel zu einer Vertikalen ausgerichtet, sodass der Bewegungsweg in eine Sperrposition des Sperrelements unabhängig von der Verzögerungsrichtung gleich groß ist. Dadurch ist gewährleistet, dass unabhängig von der Verzögerungsrichtung die Trägheitsverriegelung gleich schnell reagiert.

Weiterhin ist bevorzugt vorgesehen, dass das Drehgelenk eine in dem Sperrelement ausgebildete Bolzenaufnahme und einen an dem Fahrzeugsitz angeordneten Lagerbolzen aufweist. Hierdurch ist das Drehgelenk besonders einfach und kostengünstig realisiert. Alternativ weist das Sperrelement selbst einen Lagerbolzen auf, der in einer Bolzenaufnahme des Fahrzeugsitzes drehbar oder schwenkbar gelagert einliegt.

Besonders bevorzugt weist das Drehgelenk ein Wälzkörperlager, insbesondere Rillenkugellager, auf, sodass das Drehgelenk eine besonders geringe Reibung aufweist und dadurch leichtgängig ist.

Optional ist in die Drehlagerung ein Dämpfungselement integriert, sodass ein vorzeitiges Verschwenken des Sperrelements, wenn insbesondere Verzögerungen auftreten, die weit unterhalb der kritischen Verzögerung liegen, verhindert ist.

Erfindungsgemäß ist vorgesehen, dass die freien Enden der Schenkel jeweils eine Auflagefläche zur flächigen Auflage an dem Betätigungshebel aufweisen. Durch die Auflageflächen ist gewährleistet, dass eine sichere Anlage des Sperrelements an dem Betätigungshebel einerseits gewährleistet ist, und dass andererseits hohe Auflagekräfte übertragen werden können, ohne dass das Sperrelement oder der Betätigungshebel beschädigt werden. Dadurch ist eine dauerhaft sichere Trägheitsverriegelung des Betätigungshebels bei Auftreten einer kritischen Verzögerung gewährleistet. Unter einer kritischen Verzögerung wird dabei eine solche verstanden, die über das normale Bremsverhalten oder Beschleunigungsverhalten des Kraftfahrzeugs hinausgeht und beispielsweise bei einem Auffahrunfall oder ähnlichem auftritt. Das Sperrelement ist derart ausgelegt, dass es erst bei Auftreten einer kritischen Verzögerung entsprechend weit verschwenkt wird, dass es in die Sperrposition zwischen Betätigungshebel und Stützelement gelangt. Dies ist beispielsweise durch die Länge der Schenkel und/oder durch ein an dem jeweiligen Schenkel angeordnetes Trägheitsgewicht einstellbar. Dadurch ist insbesondere erreichbar, dass das Trägheitselement nicht verfrüht bei unkritischen Verzögerungen die Bewegung des Betätigungselements behindert, was den Benutzungskomfort einschränken würde.

Vorzugsweise weist der Betätigungshebel ein dem Sperrelement zugeordnetes Anschlagselement auf. Dadurch wirkt das Sperrelement mit dem Anschlagelement zusammen. Durch das Vorsehen des Anschlagelements wird erreicht, dass dieses optimal an die Trägheitsverriegelung anpassbar beziehungsweise angepasst ist, um eine hohe Lebensdauer und ein sicheres Sperren bei Auftreten einer kritischen Verzögerung zu erlauben. Erfindungsgemäß weist jeder der Schenkel eine von dem jeweils anderen Schenkel abgewandte Anlagefläche für das Stützelement auf. Während die Schenkel, wie vorstehend bereits erwähnt, mit ihren freien Enden jeweils an dem Betätigungshebel beziehungsweise dem Anschlagelement aufstützen, wirken die Schenkel seitlich mit ihren Anlageflächen mit dem Stützelement zusammen. Hierdurch ist gewährleistet, dass unabhängig davon, in welche Richtung die plötzlich auftretende Verzögerung wirkt, nur ein kurzer Verstellweg für das Sperrelement benötigt wird, um von der neutralen Stellung in eine Sperrstellung verschwenkt zu werden.

Weitere Vorteile und bevorzugte Merkmale und Merkmalskombinationen ergeben sich insbesondere aus dem zuvor Beschriebenen sowie aus den Ansprüchen.

Im Folgenden soll die Erfindung anhand der Zeichnung näher erläutert werden. Dazu zeigen
- Figur 1: eine vorteilhafte Fahrzeugsitzeinrichtung in einer vereinfachten perspektivischen Darstellung,
- Figur 2: eine vergrößerte Darstellung der Fahrzeugsitzeinrichtung in einem ersten Anwendungsfall,
- Figur 3: die vergrößerte Darstellung der Fahrzeugsitzeinrichtung in einem zweiten Anwendungsfall und
- Figur 4: die vergrößerte Darstellung der Fahrzeugsitzeinrichtung gemäß einem dritten Anwendungsfall.

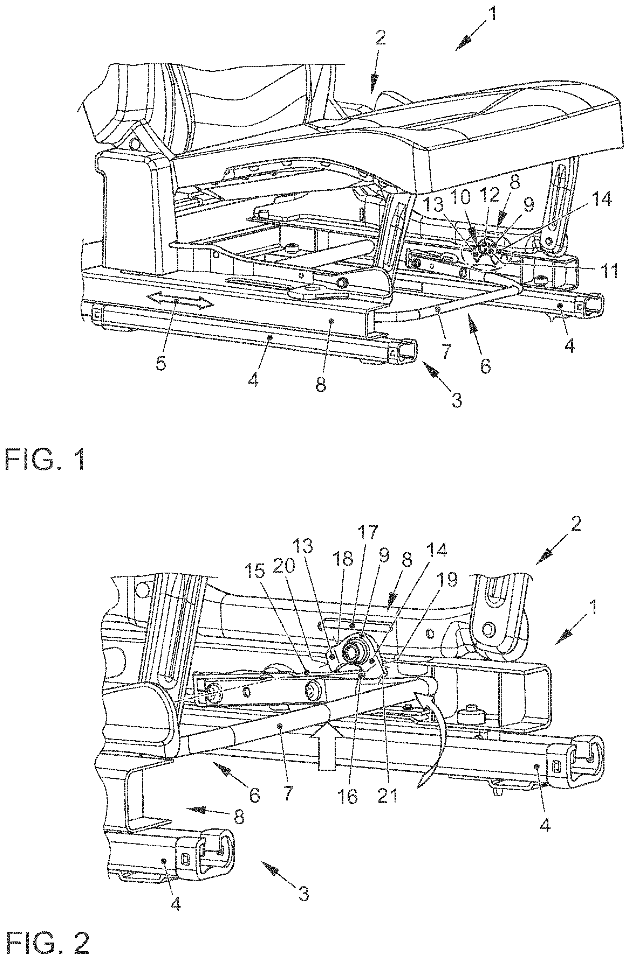

Figur 1 zeigt in einer vereinfachten perspektivischen Darstellung eine Fahrzeugsitzeinrichtung 1 für ein hier nicht näher dargestelltes Kraftfahrzeug. Die Fahrzeugsitzeinrichtung 1 weist einen Fahrzeugsitz 2 auf, der durch ein Sitzgestell 3 an einem Fahrzeugboden beziehungsweise an einer Fahrzeugkarosserie befestigbar ist. Dazu weist das Sitzgestell 3 zwei parallel und beabstandet zueinander angeordnete Führungsschienen 4 auf, entlang welcher der Fahrzeugsitz 2 längsverschieblich gelagert ist, wie durch einen Doppelpfeil 5 in Figur 1 angezeigt. Um eine Sitzposition in Schieberichtung festzulegen, weist die Fahrzeugsitzeinrichtung 1 außerdem eine Verriegelungseinrichtung 6 auf. Diese weist beispielsweise eine oder mehrere Blockierelemente auf, die mit der jeweiligen Führungsschiene 4 zur formschlüssigen Arretierung des Fahrzeugsitzes 2 in Schieberichtung in Eingriff bringbar sind. Zum Betätigen der Blockierlemente weist die Verriegelungseinrichtung 6 einen Betätigungshebel 7 auf, der um eine horizontale Achse verschwenkbar an dem Fahrzeugsitz 2 gelagert ist. Die Verriegelungseinrichtung 6 dient dazu, den Fahrzeugsitz 2 in unterschiedlichen Schiebepositionen zu arretieren. Diese Arretierung ist durch Betätigung des Betätigungshebels 7 lösbar, sodass ein Benutzer durch Betätigen des Betätigungshebels 7 den Fahrzeugsitz 2 in eine gewünschte Position entlang der Führungsschienen 4 verschieben und dort wieder arretieren kann.

Vorliegende Fahrzeugsitzeinrichtung 1 weist außerdem eine Trägheitsverriegelung 8 auf. Die Trägheitsverriegelung 8 dient dazu, bei Auftreten einer kritischen Verzögerung in Schieberichtung des Fahrzeugsitzes 2 ein Lösen der Arretierung des Fahrzeugsitzes 2 an den Führungsschienen 4 zu verhindern. Dazu weist die Trägheitsverriegelung 8 ein Sperrelement 9 auf. Das Sperrelement 9 ist verschwenkbar um eine Horizontalachse an dem Fahrzeugsitz 2 gelagert. Dazu weist das Sperrelement 9 ein Drehgelenk 10 auf, das gemäß dem vorliegenden Ausführungsbeispiel durch eine in dem Sperrelement 9 ausgebildete Bolzenaufnahme und einen durch die Bolzenaufnahme geschobenen und an dem Fahrzeugsitz 2 befestigten Lagerbolzen 12 gebildet ist. Optional ist zwischen der Bolzenaufnahme 11 und dem Lagerbolzen 12 oder zwischen dem Lagerbolzen 12 und dem Fahrzeugsitz 2 ein Wälzkörperlager, insbesondere Rillenkugellager, angeordnet, um Reibung zwischen dem Sperrelement 9 und dem Fahrzeugsitz 2 zu minimieren. Für eine kostengünstige und bauraumsparende Ausbildung ist optional anstelle des Wälzkörperlagers ein Gleitlager ausgebildet.

Das Sperrelement 9 ist im Wesentlichen V-förmig ausgebildet und weist dazu zwei Schenkel 13, 14 auf, die im Bereich des Drehgelenks 10 miteinander verbunden, insbesondere einstückig miteinander verbunden sind. Die Schenkel schließen dabei beispielsweise einen Winkel von ca. 90° bis 70°, insbesondere 80° bis 75°, ein. Außerdem sind die Schenkel 13, 14 bevorzugt, wie gezeigt, gleich lang ausgebildet, sodass in einer Neutralstellung das Sperrelement 9 derart an dem Drehgelenk 10 ausgerichtet ist, dass die Schenkel 13, 14 jeweils gleich weit seitlich abstehen beziehungsweise jeweils den gleichen Winkel zu einer vertikalen Achse durch die Rotationsachse beziehungsweise Horizontalachse des Drehgelenks einschließen, wie in Figur 1 gezeigt.

Figur 2 zeigt eine vergrößerte Darstellung der Fahrzeugsitzeinrichtung 1 aus Figur 1, mit dem Unterschied, dass der Betätigungshebel 7 durch den Benutzer nunmehr betätigt wurde, um die Sitzverriegelung aufzulösen und den Fahrzeugsitz 2 entlang der Führungsschiene 4 verschieben zu können. Sofern sich das Sperrelement 9 in der Neutralstellung befindet, wie vorstehend beschrieben, so ist der Betätigungshebel 7 in eine Öffnungsposition verlagerbar, wie sie in Figur 2 gezeigt ist, wodurch die Blockierelemente der Verriegelungseinrichtung 6 aus den Führungsschienen 4 gelöst und dadurch die Arretierung aufgehoben wird. Der Betätigungshebel 7 weist dabei ein Anschlagelement 15 auf, das fest mit dem Betätigungselement 7 verbunden ist. Vorliegend ist der Betätigungshebel 7 U-förmig ausgebildet, wobei seine zwei parallel zueinander ausgerichteten Schenkel jeweils parallel zu den Führungsschienen 4 ausgerichtet und verschwenkbar an dem Sitzgestell 3 beziehungsweise dem Fahrzeugsitz 2 gelagert sind. Das Anschlagelement 15 ist nun an dem dem Sperrelement 9 zugeordneten Schenkel angeordnet und erstreckt sich parallel zu diesem. Dabei ist das Anschlagelement 15 fest mit dem Betätigungshebel 7 verbunden, sodass die Bewegung des Betätigungselements 7 direkt auf das Anschlagelement 15 übertragen wird. Das Anschlagelement 15 liegt dabei auf Höhe des an dem Fahrzeugsitz 2 angeordneten Sperrelements 9, sodass es in der Neutralstellung und im unbetätigten Zustand unterhalb des Sperrelements 9 liegt, wie beispielsweise in Figur 1 gezeigt. Wird der Betätigungshebel 7 jedoch durch den Benutzer betätigt, so wird das Anschlagelement 15 in Richtung des Sperrelements 9 bewegt und gelangt dabei in den Zwischenraum zwischen den beiden Schenkeln 13, 14. Dabei ist die Länge des Anschlagelements 15 derart bemessen, dass sein freies Ende 16 in dem Freiraum beziehungsweise an einer dem Freiraum zugewandten Seitenfläche des einen Schenkels 14 zu liegen kommt. Dabei ist die Länge des Anschlagelements 15 sowie die Anordnung und Ausbildung des Sperrelements 9 derart gewählt, dass in dieser Position die Blockierelemente vollständig aus den Vertiefungen oder Aussparungen der jeweiligen Führungsschiene 4 herausgenommen sind, sodass ein Verschieben des Fahrzeugsitzes 2 ermöglicht ist.

Im unbetätigten Zustand des Betätigungshebels 7 liegt das Sperrelement 9 in einer Neutralstellung somit beabstandet zu dem Sperrhebel beziehungsweise dessen Anschlagelement 15 sowie beabstandet zu einem Stützelement 17. Das Stützelement 17 ist auf der an dem Betätigungshebel 7 beziehungsweise dem Anschlagelement 15 abgewandten Seite des Sperrelements 9 an dem Fahrzeugsitz angeordnet. Dabei liegt das Stützelement 17 auf Höhe beziehungsweise parallel zu dem Sperrelement 9, sodass dann, wenn dieses um die Drehachse des Drehgelenks 10 verschwenkt wird, mit einer seitlichen Anlagefläche eines der Schenkel 13 oder 14 in Berührungskontakt gelangt. Wird also das Sperrelement 9 um die Drehachse des Drehgelenks 10 verschwenkt, so kommt es entweder zur Anlage an dem Stützelement 17 durch eine seitliche Anschlagfläche 18 des Schenkels 13 oder mit einer Anschlagfläche 19 des Schenkels 14. Dadurch wird ein weiteres Verschwenken des Sperrelements 9 mithilfe des Stützelements 17 verhindert.

Weiterhin weisen die freien Enden der Schenkel 13, 14 jeweils eine Auflagefläche 20 beziehungsweise 21 auf, die zur flächigen Auflage auf dem Anschlagelement 15 ausgebildet ist. Wird das Sperrelement 9 also aus der Neutralstellung verschwenkt, sodass beispielsweise die Anschlagfläche 20 dem Sperrelement 15 gegenüberliegt, wobei der Schenkel 13 dann senkrecht oder nahezu senkrecht auf das Anschlagelement 15 ausgerichtet ist, gelangt das Anschlagelement 15 in flächigen Anlagekontakt mit der Auflagefläche 20, wenn der Betätigungshebel 7 in Richtung der Lösestellung bewegt wird. Entsprechendes gilt für den Schenkel 14 mit der Auflagefläche 21.

Das Sperrelement 9 ist dabei als Trägheitselement ausgebildet, das optional an den freien Enden der Schenkel 13, 14 jeweils Trägheitsgewichte aufweist, die insbesondere gewährleisten, dass das Sperrelement 9 durch auf den Fahrzeugsitz 2 wirkende Beschleunigungen um die Drehachse des Drehgelenks 10 verschwenkt wird. Optional ist dem Drehgelenk 9 ein Dämpfer 22 zugeordnet, der verhindert, dass das Sperrelement jederzeit beziehungsweise bei Auftreten jeder Beschleunigung oder Verzögerung verschwenkt wird. Dadurch wird gewährleistet, dass einerseits Klappergeräusche vermieden werden, und dass andererseits der Betätigungshebel 7 auch während der Fahrt oder bei niedrigen Beschleunigungen oder Verzögerungen des Kraftfahrzeugs betätigt werden kann.

Das Sperrelement 9 ist dazu ausgebildet, erst bei Auftreten einer kritischen Verzögerung, die beispielsweise auf einen Auffahrunfall oder dergleichen hindeutet, verschwenkt wird.

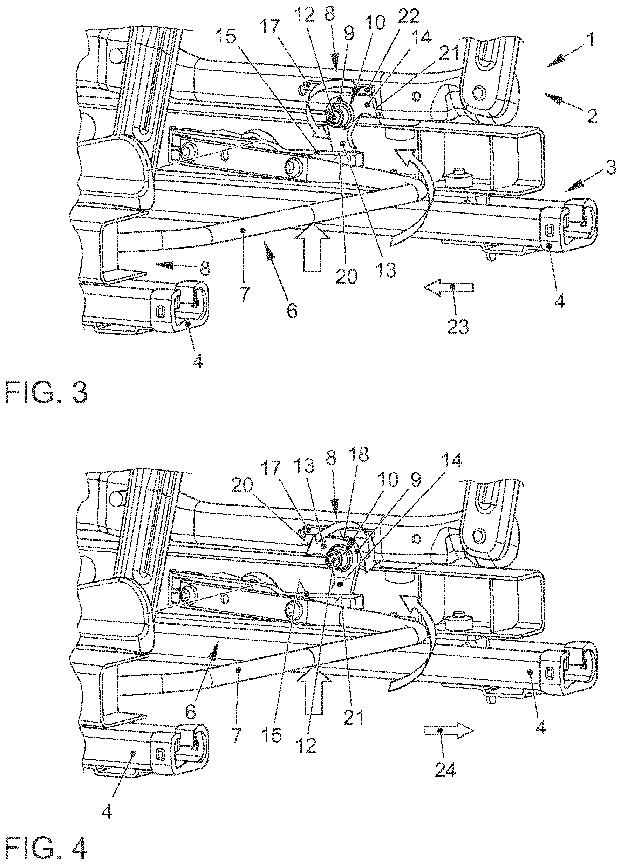

Figur 3 zeigt hierzu ein erstes Ausführungsbeispiel anhand der vergrößerten Darstellung der Fahrzeugsitzeinrichtung 1. Dieses Ausführungsbeispiel zeigt den Anwendungsfall, bei welchem auf den Fahrzeugsitz eine Verzögerung gemäß Pfeil 23 in Schieberichtung des Fahrzeugsitzes 2 aufgetreten ist. Vorliegend wirkt dabei die Verzögerung entgegen der Sitzrichtung des Fahrzeugsitzes 2. Durch sein Trägheitsmoment wird das Sperrelement 9 dabei gegen den Uhrzeigersinn derart verschwenkt, dass der Schenkel 14 nunmehr nahezu horizontal ausgerichtet ist. Das Stützelement 17 gewährleistet, dass das Sperrelement 9 maximal bis in diese Stellung verschwenkbar ist, sodass der Schenkel 13 auf das Anschlagelement 15 weist und die Auflagefläche 20 dem Anschlagelement 15 gegenüberliegt, wie in Figur 3 gezeigt. Wird nun der Betätigungshebel 7 durch den Benutzer oder einen auf dem Fußboden befindlichen und nicht festgemachten Gegenstand mit einer Kraft in Öffnungsrichtung beaufschlagt, so stößt das Anschlagelement 15 gegen die Auflagefläche 20 des Sperrelements 9. Weil dieses an einem Weiterdrehen durch das Stützelement 17 gehindert ist, stützt sich der Betätigungshebel 7 somit einem Sperrelement 9, welches sich wiederum an dem Stützelement 17 an dem Fahrzeugsitz 2 abstützt. Eine Bewegung des Sperrhebels 7 in die Öffnungsstellung ist dadurch mechanisch sicher verhindert.

Figur 4 zeigt den Anwendungsfall, wenn eine Beschleunigung in die entgegengesetzte Richtung gemäß Pfeil 24 auftritt. In diesem Fall schwenkt das Sperrelement 9 durch seine Trägheit im Uhrzeigersinn um die Drehachse des Drehgelenks 10 herum, sodass nunmehr der Schenkel 14 auf das Anschlagelement 15 zuweist und die Auflagefläche 21 dem Anschlagelement 15 gegenüberliegt. Nunmehr liegt die Anlagefläche 18 des Schenkels 13 an dem Stützelement 17 des Fahrzeugsitzes 2 an und der Betätigungshebel 7 wird durch das Zusammenwirken von Anschlagelement 15, Sperrelement 9 und Stützelement 17 daran gehindert, in die Öffnungsposition bewegt zu werden.

Hierdurch wird auf einfache Art und Weise eine Trägheitsverriegelung realisiert, die insbesondere ein ungewolltes Betätigen der Verriegelungseinrichtung zum Lösen der Arretierung beim Auftreten einer kritischen Verzögerung verhindert.

Optional ist die Trägheitsverriegelung 8 ohne das Stützelement 17 ausgebildet. Dann sind das Sperrelement 9 und das Anschlagelement 15 vorzugsweise derart ausgebildet, dass in der Blockierstellung einer der Schenkel 13 oder 14 senkrecht zur Rotationsachse ausgerichtet ist, und dass dann, wenn das Anschlagelement 15 gegen die Auflagefläche 20 oder 21 trifft, die Betätigungskraft senkrecht in die Drehachse beziehungsweise in das Drehgelenk eingeleitet wird, sodass die Bewegung des Betätigungshebels 7 blockiert ist. Durch das Anpassen der Auflageflächen 20, 21 an die Form des Anschlagelements 15, wird erreicht, dass ein seitliches Wegdrücken des jeweiligen Schenkels 13, 14 durch das Anschlagelement 15 formschlüssig verhindert ist.

Weiterhin ist bevorzugt vorgesehen, dass jeder der Führungsschienen eine, wie vorstehend beschrieben ausgebildete, Trägheitsverriegelung 8 zugeordnet ist, um die Funktionssicherheit zu erhöhen.

### Bezugszeichenliste

- 1: Fahrzeugsitzeinrichtung
- 2: Fahrzeugsitz
- 3: Sitzgestell
- 4: Führungsschiene
- 5: Doppelpfeil
- 6: Verriegelungseinrichtung
- 7: Betätigungshebel
- 8: Trägheitsverriegelung
- 9: Sperrelement
- 10: Drehgelenk
- 11: Bolzenaufnahme
- 12: Lagerbolzen
- 13: Schenkel
- 14: Schenkel
- 15: Anschlagelement
- 16: Ende
- 17: Stützelement
- 18: Anschlagfläche
- 19: Anschlagfläche
- 20: Auflagefläche
- 21: Auflagefläche
- 22: Dämpfer
- 23: Pfeil
- 24: Pfeil

## Patentansprüche

1. Fahrzeugsitzeinrichtung (1) für ein Kraftfahrzeug, mit einem Fahrzeugsitz (2), der ein Sitzgestell (3) mit zumindest einer Führungsschiene (4) zur längsverschieblichen Lagerung des Fahrzeugsitzes (2) relativ zu einer Fahrzeugkarosserie aufweist, mit einer Verriegelungseinrichtung (6) zum Arretieren des Fahrzeugsitzes (2) in mehreren Schiebepositionen entlang der Führungsschiene (4), mit einem verlagerbaren und mit der Verriegelungseinrichtung (6) gekoppelten Betätigungshebel (7) zum Lösen der Arretierung, und mit einer Trägheitsverriegelung (8), die dazu ausgebildet ist, ein Verschieben des Fahrzeugsitzes (2) bei Auftreten einer kritischen Verzögerung in Schieberichtung zu verhindern, und wobei die Trägheitsverriegelung (8) ein um eine Horizontalachse verschwenkbar gelagertes Sperrelement (9) aufweist, das in einer Neutralstellung beabstandet zu dem Betätigungshebel (7) liegt, und bei Auftreten einer kritischen Verzögerung durch seine Trägheit derart in eine Blockierstellung verschwenkt ist, dass es blockierend an dem Betätigungshebel (7) anliegt, **dadurch gekennzeichnet, dass** das Sperrelement (9) in der Neutralstellung beabstandet zu dem Betätigungshebel (7) und zu einem an dem Fahrzeugsitz (2) fest angeordneten Stützelement (17) angeordnet ist, wobei das Stützelement (17) den Schwenkweg des Sperrelementes (9) über die Blockierstellung hinaus derart begrenzt, dass das Sperrelement (9) in der Blockierstellung an dem Stützelement (17) anliegt, dass das Sperrelement (9) zwei Schenkel (13,14) aufweist, die einendig miteinander verbunden und V-förmig oder L-förmig zueinander ausgerichtet sind, dass jeder der Schenkel (13,14) eine von dem jeweils anderen Schenkel (13,14) abgewandte Anlagefläche (18,19) für das Stützelement (17) aufweist und dass die freien Enden der Schenkel (13,14) jeweils eine Auflagefläche (20,21) zur flächigen Auflage an dem Betätigungshebel (7) aufweisen.

2. Fahrzeugsitzeinrichtung nach Anspruch 1, **dadurch gekennzeichnet, dass** die Schenkel (13,14) gleich lang ausgebildet sind.

3. Fahrzeugsitzeinrichtung nach einem der vorhergehenden Ansprüche, **dadurch gekennzeichnet, dass** das Sperrelement (9) im Verbindungsbereich der Schenkel (13,14) ein Drehgelenk (10) zur schwenkbaren Lagerung an dem Fahrzeugsitz (2) aufweist.

4. Fahrzeugsitzeinrichtung nach Anspruch 3, **dadurch gekennzeichnet, dass** das Drehgelenk (10) eine in dem Sperrelement (9) ausgebildete Bolzenaufnahme (11) und einen an dem Fahrzeugsitz (2) angeordneten Lagerbolzen (12) aufweist.

5. Fahrzeugsitzeinrichtung nach einem der Ansprüche 3 und 4, **dadurch gekennzeichnet, dass** das Drehgelenk (10) ein Wälzkörperlager oder ein Gleitlager aufweist.

6. Fahrzeugsitzeinrichtung nach einem der Ansprüche 3 bis 5, **dadurch gekennzeichnet, dass** das Drehgelenk (10) ein Dämpfungselement aufweist.

7. Fahrzeugsitzeinrichtung nach einem der vorhergehenden Ansprüche, **dadurch gekennzeichnet, dass** der Betätigungshebel (7) ein dem Sperrelement (9) zugeordnetes Anschlagselement (15) aufweist.

## Claims

1. Vehicle seat device (1) for a motor vehicle, having a vehicle seat (2) which has a seat frame (3) with at least one guide rail (4) for the longitudinally displaceable mounting of the vehicle seat (2) relative to a vehicle body, having a locking device (6) for locking the vehicle seat (2) in a plurality of sliding positions along the guide rail (4), having a shiftable actuating lever (7), which is coupled to the locking device (6), for releasing the locking, and having an inertia lock (8) which is designed to prevent displacement of the vehicle seat (2) in the sliding direction when a critical deceleration occurs, and wherein the inertia lock (8) has a blocking element (9) which is mounted pivotably about a horizontal axis and lies at a distance from the actuating lever (7) in a neutral position and, when a critical deceleration occurs, is pivoted by its inertia into a blocking position in such a manner that it lies on the actuating lever (7) so as to block same, **characterized in that**, in the neutral position, the blocking element (9) is arranged at a distance from the actuating lever (7) and from a support element (17) arranged fixedly on the vehicle seat (2), wherein the support element (17) limits the pivoting path of the blocking element (9) beyond the blocking position in such a manner that the blocking element (9) lies on the support element (17) in the blocking position, **in that** the blocking element (9) has two limbs (13, 14) which are connected to each other at one end and are aligned in a V-shaped or L-shaped manner with respect to each other, **in that** each of the limbs (13, 14) has a contact surface (18, 19), which faces away from the respectively other limb (13, 14), for the support element (17), and **in that** the free ends of the limbs (13, 14) each have a supporting surface (20, 21) for planar support on the actuating lever (7) .

2. Vehicle seat device according to Claim 1, **characterized in that** the limbs (13, 14) are identical in length.

3. Vehicle seat device according to either of the preceding claims, **characterized in that** the blocking element (9) in the connecting region of the limbs (13, 14) has a rotary joint (10) for the pivotable mounting on the vehicle seat (2).

4. Vehicle seat device according to Claim 3, **characterized in that** the rotary joint (10) has a pin receptacle (11) formed in the blocking element (9) and a bearing pin (12) arranged on the vehicle seat (2) .

5. Vehicle seat device according to either of Claims 3 and 4, **characterized in that** the rotary joint (10) has a rolling body bearing or a plain bearing.

6. Vehicle seat device according to one of Claims 3 to 5, **characterized in that** the rotary joint (10) has a damping element.

7. Vehicle seat device according to one of the preceding claims, **characterized in that** the actuating lever (7) has a stop element (15) assigned to the blocking element (9).

## Revendications

1. Dispositif formant siège de véhicule (1) destiné à un véhicule automobile, ledit dispositif comprenant un siège de véhicule (2) qui comporte un cadre de siège (3) pourvu d'au moins un rail de guidage (4) destiné à monter le siège de véhicule (2) de manière coulissante longitudinalement par rapport à une carrosserie de véhicule, un dispositif de verrouillage (6) destiné à bloquer le siège de véhicule (2) dans plusieurs positions de coulissement le long du rail de guidage (4), un levier d'actionnement (7) déplaçable, accouplé au dispositif de verrouillage (6) et destiné à libérer le blocage, et un moyen de verrouillage à inertie (8) conçu pour empêcher le siège de véhicule (2) de coulisser lorsqu'une décélération critique se produit dans le sens de coulissement, et le moyen de verrouillage à inertie (8) comportant un élément de blocage (9) qui peut pivoter sur un axe horizontal et qui est situé dans une position neutre à distance du levier d'actionnement (7) et, lorsqu'une décélération critique se produit, est pivoté jusque dans une position de blocage par son inertie afin de venir en appui de manière bloquante sur le levier d'actionnement (7), **caractérisé en ce que** l'élément de blocage (9) est disposé dans la position neutre à distance du levier d'actionnement (7) et d'un élément d'appui (17) disposé de manière fixe sur le siège de véhicule (2), l'élément d'appui (17) limitant la course de pivotement de l'élément de blocage (9) au-delà de la position de blocage de manière à ce que l'élément de blocage (9) vienne en appuie sur l'élément d'appui (17) dans la position de blocage, **en ce que** l'élément de blocage (9) comporte deux branches (13, 14) qui sont reliées l'une à l'autre à une extrémité et qui sont orientées en forme de V ou de L l'une par rapport à l'autre, **en ce que** chacune des branches (13, 14) comporte une surface d'appui (18, 19) dirigée à l'opposé de l'autre branche (13, 14) et destinée à l'élément d'appui (17) et **en ce que** les extrémités libres des branches (13, 14) comportent chacune une surface d'appui (20, 21) destinée à venir en appui à plat sur le levier d'actionnement (7).

2. Dispositif formant siège de véhicule selon la revendication 1, **caractérisé en ce que** les branches (13, 14) ont la même longueur.

3. Dispositif formant siège de véhicule selon l'une des revendications précédentes, **caractérisé en ce que** l'élément de blocage (9) comporte dans la zone de liaison des branches (13, 14) une articulation rotative (10) destinée à être montée de manière pivotante sur le siège de véhicule (2).

4. Dispositif formant siège de véhicule selon la revendication 3, **caractérisé en ce que** l'articulation rotative (10) comporte un logement de tourillon (11) ménagé dans l'élément de blocage (9) et un tourillon (12) disposé au niveau du siège de véhicule (2).

5. Dispositif formant siège de véhicule selon l'une des revendications 3 et 4, **caractérisé en ce que** l'articulation rotative (10) comporte un palier à roulement ou un palier lisse.

6. Dispositif formant siège de véhicule selon l'une des revendications 3 à 5, **caractérisé en ce que** l'articulation rotative (10) comporte un élément amortisseur.

7. Dispositif formant siège de véhicule selon l'une des revendications précédentes, **caractérisé en ce que** le levier d'actionnement (7) comporte un élément de butée (15) associé à l'élément de blocage (9).
